# EUROPEAN PATENT SPECIFICATION

(11) **EP 3 133 190 B1**
(45) Date of publication and mention of the grant of the patent: **06.11.2024**
(21) Application number: 14889594.9
(22) Date of filing: 04.08.2014
(51) Int. Cl.: B82Y 30/00, C01B 32/16, D06M 13/192, D06M 101/40, D01F 9/127, B82Y 40/00, D06M 15/263

(54) **CARBON NANOTUBE FIBER AND MANUFACTURING METHOD THEREOF**
KOHLENSTOFFNANORÖHRCHENFASER UND HERSTELLUNGSVERFAHREN DAFÜR
FIBRE DE NANOTUBES DE CARBONE ET PROCÉDÉ DE FABRICATION ASSOCIÉ

(30) Priority: 17.04.2014 KR 20140046277
(43) Date of publication of application: 22.02.2017
(73) Proprietor: POSCO Co., Ltd, Pohang-si, Gyeongsangbuk-do 37859 (KR); Postech Academy-Industry Foundation, Pohang-si, Gyeongsangbuk-do 790-784 (KR)
(72) Inventor: LEE, Kun-Hong, Pohang-si Gyeongsangbuk-do 790-751 (KR); LEE, Jaegeun, Daegu 706-170 (KR); JUNG, A Lum, Seoul 157-773 (KR)
(74) Representative: Potter Clarkson
(86) International application number: PCT/KR2014/007177
(87) International publication number: WO 2015/160041

(56) References cited:
- JP-A- 2011 153 392
- KR-A- 20080 008 812
- KR-A- 20130 036 527
- KR-A- 20140 021 116
- KR-A- 20140 021 116
- KR-B1- 101 309 730
- US-A1- 2006 275 956
- US-A1- 2009 252 535
- US-A1- 2010 272 978
- US-A1- 2014 012 034
- US-B1- 8 470 946
- JIE MIN ET AL: "High performance carbon nanotube spun yarns from a crosslinked network", CARBON., vol. 52, 12 October 2012 (2012-10-12), GB, pages 520 - 527, XP055418038, ISSN: 0008-6223, DOI: 10.1016/j.carbon.2012.10.004
- MIAO MENGHE ED - WEI FEI ET AL: "Yarn spun from carbon nanotube forests: Production, structure, properties and applications", PARTICUOLOGY, ELSEVIER, AMSTERDAM, NL, vol. 11, no. 4, 28 February 2013 (2013-02-28), pages 378 - 393, XP028568663, ISSN: 1674-2001, DOI: 10.1016/J.PARTIC.2012.06.017

## Description

### [Technical Field]

The present invention relates to carbon nanotube fiber and a method for producing the same.

### [Background Art]

A carbon nanotube is a nanomaterial having excellent mechanical strength, and tensile strength of one strand of the carbon nanotube is up to 150 GPa.

On the contrary, tensile strength of a carbon nanotube fiber is generally 2 GPa or less, which is very weak compared to the carbon nanotube. The carbon nanotube fiber is consisting of many carbon nanotubes, but walls of the carbon nanotubes are not connected due to a van Der Waals force, which is weak molecule bonding.

Thus, various physical and chemical methods have been attempted to enhance the strength of the carbon nanotube fiber.

As a physical method, a solvent may be sprayed to the carbon nanotube fiber or the carbon nanotube fiber may be soaked in the solvent so as to shrink the carbon nanotube fiber. When the carbon nanotube fibers are shrunk, a distance between the carbon nanotube fibers is decreased such that the van Der Waals force can be enhanced, thereby increasing strength of the carbon nanotube fiber.

However, since the van Der Waals force is basically weak due to a covalent bond, there is a limit in enhancement of the strength of the carbon nanotube fiber through such a physical method.

Meanwhile, as a chemical method, a polymer may be used to fill between carbon nanotubes that compose the carbon nanotube fiber, or carbon nanotubes may have a covalent bond, which is stronger than the van Der Waals force, through cross-linking between the carbon nanotubes.

As a general chemical method, the fiber is soaked in a reaction solution and then a chemical reaction is performed thereon. In this case, a reactant cannot be dispersed on the center of the carbon nanotube fiber so that the reaction can hardly occur in the center of the carbon nanotube. Accordingly, a desired effect cannot be acquired from the chemical reaction, and mechanical strength of the carbon nanotube fiber cannot be significantly enhanced.

The carbon nanotubes composing the carbon nanotube fiber have higher reactivity at end portions than in wall surfaces. Substantially, the cross-linking which has been reported up to now shows than the reaction mostly occurs in the end portions rather than in the wall surfaces of the carbon nanotubes, and thus bonding force between walls of the carbon nanotubes cannot be significantly increased.

Specifically, when the chemical method is used, tensile strength of the carbon nanotube fiber is increased to about 5 GPa.

US 2009/252535 describes a CNT yarn formed from a plurality of chemical vapor deposition (CVD) grown CNTs with a tensile strength of from 1 GPa to 6 GPa. JP 2011/153392 describes a method of forming CNT yarn from CVD grown CNT ribbon and using a cross-link agent. US 8470946 describes a method of producing CNT fiber comprising ribbons of CNTs and plasma activation to cross-link a nano-resin to the CNT wall. KR 20140021116 describes a method of manufacturing carbon nanotube fiber yarns comprising synthesized nanotubes from CVD, cross-linking with the aid of cross-link agent and twisting the yarns. Jie Min, et al., Carbon, 52, 520-527, (2012), describes a method of creating covalent cross-links between CNTs.

### [DISCLOSURE]

### [Technical Problem]

The present invention has been made in an effort to provide an excellent carbon nanotube fiber as claimed in claim 1 having a tensile strength which exceeds 5 GPa

Another exemplary embodiment of the present invention provides a method for producing high-strength carbon nanotube fiber as claimed in claim 3 of which wall surfaces of carbon nanotubes are cross-linked.

### [Technical Solution]

In one exemplary embodiment of the present invention as claimed in claim 1, carbon nanotube fiber having a tensile strength which exceeds 5 GPa is provided.

Wall surfaces of carbon nanotubes that compose the carbon nanotube fiber are cross-linked.

The cross-linking is resulted from an acylation reaction between the wall surfaces of the carbon nanotubes.

The acylation reaction is a one step reaction.

A diameter of a carbon nanotube may be 1 µm to 150 µm, and specifically, may be 3 µm to 30 µm.

According to another exemplary embodiment of the present invention as claimed in claim 3, a method for producing a high-strength carbon nanotube fiber precursor is provided. The method includes: producing a carbon nanotube fiber precursor consisting of carbon nanotubes; evenly dispersing a cross-linking agent on the carbon nanotube fiber precursor; and acquiring carbon nanotube fiber by thermally treating the carbon nanotube fiber precursor on which the cross-linking agent is evenly dispersed, wherein the acquired carbon nanotube fiber has cross-linking between wall surfaces of the carbon nanotubes each other.

The producing of a carbon nanotube fiber precursor consisting of the carbon nanotubes is performed by one of methods of forest spinning, direct spinning, and solution spinning. Specifically, the producing of a carbon nanotube fiber precursor consisting of the carbon nanotubes may be performed by forest spinning.

More specifically, the producing of a carbon nanotube fiber precursor consisting of the carbon nanotubes may include: preparing a substrate; growing carbon nanotubes on the substrate; and drawing out carbon nanotube fiber from the substrate where the carbon nanotubes have been grown.

In this case, the substrate may include silicon.

The drawing out of the carbon nanotube fiber precursor from the substrate where the carbon nanotubes have been grown may be performed by stretching the carbon nanotubes grown on the substrate in one direction, and pulling out the stretched carbon nanotubes in the form of a noddle.

The carbon nanotube fiber precursor may be formed in the shape of a carbon nanotube ribbon.

The producing of a carbon nanotube fiber precursor consisting of the carbon nanotubes may be performed in a temperature range of 600 °C to 1000 °C. Specifically, the temperature range may be 630 °C to 670 °C.

In the producing of a carbon nanotube fiber precursor consisting of the carbon nanotubes, at least one selected from a group of C1 to C20 hydrocarbons may be used as a carbon source.

The evenly dispersing of the cross-linking agent on the carbon nanotube fiber precursor may be performed by using one of an air gun, a nebulizer, heating, and vacuuming

Alternatively, the evenly dispersing of the cross-linking agent on the carbon nanotube fiber precursor may be performed by soaking one end of the carbon nanotube fiber precursor in the cross-linking agent in a liquid state.

The cross-linking agent may include two or more acyl groups. Specifically, the cross-linking agent may be one or more selected from a group including a halogenated acyl compound and a carboxylic acid compound. More specifically, the cross-linking agent may be one or more selected from a group including azelaic acid dichloride, poly(acryloyl chloride), azelaic acid, and polyacryl acid.

The acquiring of the carbon nanotube fiber by thermally treating the carbon nanotube fiber precursor on which the cross-linking agent is evenly dispersed is performed through a one step reaction. Specifically, the acquiring of the carbon nanotube fiber by thermally treating the carbon nanotube fiber precursor on which the cross-linking agent is evenly dispersed is performed through an acylation reaction.

The acquiring of the carbon nanotube fiber by thermally treating the carbon nanotube fiber precursor on which the cross-linking agent is evenly dispersed may be performed under a nitrogen or inert atmosphere.

Further, the thermal treatment may be performed in a temperature range of 160 °C to 250 °C.

A diameter of the acquired carbon nanotube fiber may be 1 µm to 150 µm.

Tensile strength of the acquired carbon nanotube fiber may be 5 GPa to 40 GPa, or specifically, may be 30 GPa to 40 GPa.

### [Advantageous Effects]

According to the exemplary embodiment of the present invention, the tensile strength of the carbon nanotube fiber can be enhanced.

According to another exemplary embodiment, a simplified method for producing high-strength carbon nanotube fiber according to the present invention can be provided.

### [Description of the Drawings]

FIG. 1 is an analysis result of Fourier transformed infrared spectroscopy of carbon nanotube fiber according to an exemplary embodiment of the present invention (upper curve) and carbon nanotube fiber produced using a conventional method (lower curve).
FIG. 2 is a scanning electron microscope photograph of the carbon nanotube fiber according to the exemplary embodiment of the present invention.
FIG. 3 is a measurement result of tensile strength of the carbon nanotube fiber according to the exemplary embodiment of the present invention performed four times.
FIG. 4 is a measurement result of tensile strength of carbon nanotube fiber produced using a conventional method.

### [Mode for Invention]

Hereinafter, exemplary embodiments of the present invention will be described. The exemplary embodiments, however, are provided as examples, and the present invention is not limited thereto, but is defined within the range of claims to be described below.

In an exemplary embodiment of the present invention, a carbon nanotube fiber having tensile strength which exceeds 5 GPa is provided.

In detail, the tensile strength may exceed 10 GPa, and specifically, may exceed 20 GPa, and more specifically may exceed 30 GPa.

It is preferably that the tensile strength is as high as possible for a desired effect, but in general, the tensile strength can be achieved to 36 GPa.

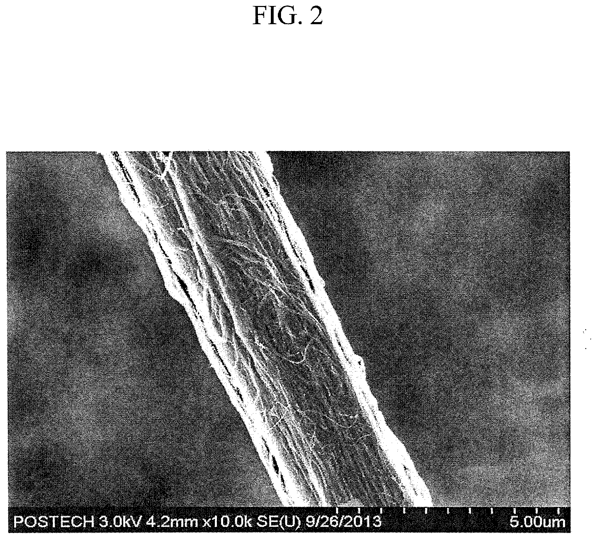

FIG. 2 is a scanning electron microscope of carbon nanotube fiber according to an exemplary embodiment of the present invention.

The carbon nanotube fiber has a shape such that walls of the carbon nanotube fiber, which composes the carbon nanotube fiber, are combined in a crosslinked manner.

In this case, the cross-linking implies that carbon chains are chemically connected to each other directly or through several bonds at locations other than ends of the carbon chains. Since a covalent bond, which is stronger than van Der Waals force, is formed by the cross-linking, strength of the carbon nanotube can be increased.

In addition, the cross-linking between walls rather than at ends of the carbon nanotubes can effectively increase shearing strength between carbon nanotubes. Accordingly, strength can be effectively transferred within the carbon nanotube fiber so that strength of the carbon nanotube fiber can be reinforced.

Meanwhile, the cross-linking is formed through an acylation reaction between walls of the carbon nanotubes. The acylation reaction is a reaction that can substitute hydrogen included in an organic compound with an acyl group, and has higher reactivity in the wall of the carbon nanotube than in the end of the carbon nanotube.

Further, the acylation reaction is a one step reaction. Thus, the crosslink can be formed through a simple process without undergoing several steps such as surface modification of the carbon nanotube and the like.

The diameter of the carbon nanotube fiber may be 1 µm to 150 µm, and particularly, 3 µm to 30 µm.

According to another exemplary embodiment of the present invention, a method for producing high-strength carbon nanotube fiber is provided. The method includes: producing a carbon nanotube fiber precursor consisting of carbon nanotubes; evenly distributing a cross-linking agent in the carbon nanotube fiber precursor; and acquiring carbon nanotubes by thermally treating the carbon nanotube fiber precursor on which the cross-linking agent is evenly distributed, and the acquired carbon nanotube fiber is formed by cross-linking walls of the carbon nanotubes.

In this case, the carbon nanotube fiber precursor implies fiber that is formed by agglomerating carbon nanotubes which compose the carbon nanotube fiber precursor in an axis direction, and specifically, covers all of carbon nanotube ribbon, fiber, and yarn.

The carbon nanotube fiber precursor has a structure in which the carbon nanotubes are arranged in the axis direction, and specifically, is defined as a concept that covers carbon nanotube ribbons having a structure in which carbon nanotubes are arranged in a film shape, carbon nanotube fibers having a structure in which carbon nanotubes are arranged in the form of fiber, and carbon nanotube yarn having a structure in which carbon nanotubes are twisted.

Further, as previously described, the acquired carbon nanotube fiber is defined as carbon nanotube fibers having a structure in which walls of carbon nanotubes are cross-linked. That is, the acquired carbon nanotube differs from the carbon nanotube fiber precursor depending on whether or not the walls of the carbon nanotubes are cross-linked.

Hereinafter, the method for producing the high-strength carbon nanotube fiber according to the exemplary embodiment of the present invention will be described in detail.

The producing of the carbon nanotube fiber precursor consisting of the carbon nanotubes may be performed by using one of forest spinning, direct spinning, and solution spinning, and specifically, the forest spinning may be used.

The forest spinning is a method in which a carbon nanotube forest is composed on a substrate and then the carbon nanotube precursor is drawn out, the direct spinning is a method in which a carbon nanotube fiber is produced by composing the carbon nanotube in an aerogel state, and the solution spinning is a method in which only carbon nanotubes are collected from a solution in which the carbon nanotubes are dispersed.

The forest spinning may include preparing a substrate, growing carbon nanotubes on the substrate, and drawing out a carbon nanotube precursor from the substrate where the carbon nanotubes have been grown.

In this case, the substrate is one of which the surface has very low roughness, and may include a silicon substrate or a silicon/silicon oxide substrate. Specifically, one or more selected from a group that includes alumina and iron may be deposited on the substrate. More specifically, a silicon oxide, alumina, and iron may be sequentially deposited on the silicon substrate.

In the drawing out of the carbon nanotube precursor from the substrate where the carbon nanotubes have been grown, the carbon nanotubes grown on the substrate may be stretched in one direction and then pulled out in the form of a noodle.

Thus, the carbon nanotube fiber precursor may have a shape of a carbon nanotube ribbon.

For example, the carbon nanotube ribbon may be pulled out in the form of a noddle while pulling ends of vertically grown carbon nanotube arrays to a silicon wafer. Thus, several nanometers of carbon nanotube bundles can be formed by collecting the carbon nanotubes, and the bundles of carbon nanotubes are collected such that a carbon nanotube ribbon having a very wide surface area can be formed.

Meanwhile, the producing of the carbon nanotube precursor consisting of carbon nanotubes may be performed in a temperature range of 600 °C to 1000 °C. When the temperature range exceeds 1000 °C, speed of dissolution of acetylene gas becomes too fast and thus carbon is excessively supplied such that a catalyst is poisoned, thereby deteriorating stable growth of the carbon nanotubes. Further, when the temperature range is 600 °C or less, carbon is insufficiently supplied to the catalyst due to poor dissolution of acetylene gas.

The temperature range may specifically be 630 °C to 670 °C.

In addition, when the carbon nanotube precursor consisting of the carbon nanotubes is produced, at least one selected from a group of C1 to C20 hydrocarbons may be used as a carbon source, and specifically, one of acetylene, methane, and ethylene may be used.

When the cross-linking agent is evenly dispersed to the carbon nanotube fiber precursor, one of an air gun, a nebulizer, heating, and vacuuming may be used.

For example, the cross-linking agent is sprayed to the surface of the carbon nanotube fiber precursor, which has a maximum surface area, using the air gun, such that the cross-linking agent can be evenly dispersed within the carbon nanotube fiber precursor.

Alternatively, an end of the carbon nanotube fiber precursor is soaked in the cross-linking agent in a solution state. Then, the cross-linking agent can be evenly dispersed within carbon nanotube precursor by capillary action.

Meanwhile, the cross-linking agent may include two or more acyl groups, and specifically, may be a material including acyl groups at opposite ends thereof. In this case, cross-linking between walls of the carbon nanotubes that form the carbon nanotube fiber may be formed through a one step reaction.

Specifically, the cross-linking agent is a material having very high reactivity, and may be one or more selected from a group including a halogenated acyl compound and a carboxylic acid compound.

For example, azelaic acid dichloride that exists in a liquid state at room temperature may be used. Further, since functional groups are included in opposite ends, cross-linking can be formed through a one step reaction.

More specifically, as a compound including carboxylic acid or COCI functional groups at opposite ends thereof regardless of the number of carbons, the cross-linking agent may be one or more selected from a group including azelaic acid dichloride, poly(acryloyl chloride), azelaic acid, and polyacrylic acid.

The thermal treatment of the carbon nanotube fiber precursor on which the cross-linking agent is evenly dispersed and the acquiring the carbon nanotube fiber may be performed through the one step reaction. More specifically, they may be performed through an acylation reaction. The cross-linking and the acylation reaction are as described above.

That is, they may be performed under a nitrogen or inert atmosphere.

Further, the heat treatment may be performed within a temperature range of 160 °C to 250 °C. When the temperature range exceeds 250 °C, the cross-linking agent is dissolved such that cross-linking cannot occur, and when the temperature range is below 160 °C, energy is not sufficient for causing a reaction.

A diameter of the acquired carbon nanotube fiber may be 1 µm to 150 µm, and specifically, may be 3 µm to 30 µm.

In addition, tensile strength of the acquired carbon nanotube fiber may be 5 GPa to 40 GPa. Specifically, the tensile strength of the acquired carbon nanotube fiber may be 20 GPa to 40 GPa, and more specifically, it may be 30 GPa to 40 GPa.

The following examples illustrate a preferable exemplary embodiment and a comparative example of the present invention in more detail. However, the following exemplary embodiment is just an example of the present invention, and the present invention is not limited thereto.

### (Exemplary Embodiment) Manufacturing of carbon nanotube fiber according to an exemplary embodiment of the present invention a) Manufacturing carbon nanotube ribbon

A carbon nanotube ribbon was formed on a substrate using forest spinning.

As the substrate, a silicon wafer (Siltron Inc. Korea, <100> direction, thickness: 660-690 µm) where 300 nm of silicon dioxide (SiO₂) was deposited was used, 10 nm of aluminum oxide (Al₂O₃) was deposited on the substrate using an atomic layer deposition method, and then 1 nm of iron (Fe) was deposited on the aluminum oxide using an e-beam deposition method.

The substrate was located at a center of a tube-type furnace (Lindberg Blue M, HTF55322, tube diameter 4 cm, length 70 cm), and then the temperature of the furnace was increased while injecting argon (Ar) at 500 sccm therein. After the temperature reached 670 °C, which is a reaction temperature, a carbon nanotube array was composed by injecting argon at 386 sccm, hydrogen at 96 sccm, and acetylene at 19 sccm for about 3 min.

Thereafter, supply of the hydrogen and acetylene was stopped and the temperature was reduced to room temperature under an argon atmosphere, and then the substrate where the carbon nanotube array was composed was discharged. Next, the carbon nanotube array was stretched while pulling one end of the array in one direction such that a carbon nanotube ribbon of which a surface area was maximized could be acquired.

### b) Spraying of Cross-linking Agent

0.5 ml of azelaic acid dichloride in a liquid state was sprayed onto the surface of the produced carbon nanotube ribbon using an air gun (BLUE BIRD).

Since azelaic acid dichloride exists in a liquid state at room temperature, the azelaic acid dichloride could be evenly sprayed between carbon nanotubes in the carbon nanotube ribbon of which the surface area was maximized by using the air gun.

### c) Acylation Reaction

The carbon nanotube ribbon on which azelaic acid dichloride was evenly dispersed was placed in a furnace (Lindberg Blue M, HTF55322, tube diameter 4 cm, length 70 cm) and then heated to 160 °C under an argon atmosphere.

In this case, since azelaic acid dichloride has very high reactivity, azelaic acid dichloride reacted with an aromatic ring of a wall of the carbon nanotubes, thereby causing an acylation reaction. Further, since functional groups were included in opposite ends of the azelaic acid dichloride, cross-linking could be formed through a one step reaction.

### (Comparative Example) Manufacturing carbon nanotube fiber according to existing method

One end of 100 nm-length carbon nanotube fiber produced in the above-stated exemplary embodiment was fixed and the other was connected to a motor. In this case, an angle formed by the bottom and the fiber was set to be 10° to 15°.

Carbon nanotube fiber was produced by twisting the ribbon while rotating the motor at 200 rpm to 2000 rpm.

### (Experimental Example 1) Result of Fourier transformed infrared spectroscopy analysis

Fourier transformed infrared spectroscopy analysis (VARIAN, 670-IR) was performed on the carbon nanotube fiber according to the exemplary embodiment and the carbon nanotube fiber according to the comparative example, respectively.

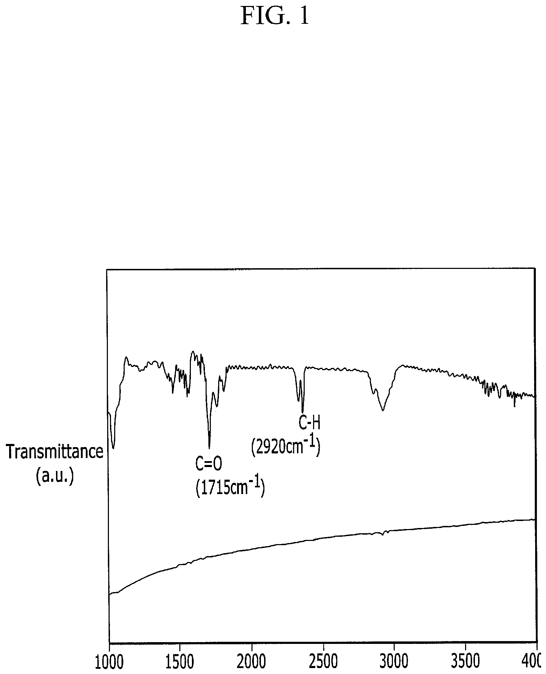

FIG. 1 shows a result of the Fourier transformed infrared spectroscopy analysis of the carbon nanotube fiber according to the exemplary embodiment (upper curve) and the carbon nanotube fiber according to the comparative example (lower curve).

Referring to FIG. 1, no specific peak occurs in the functional groups in the carbon nanotube fiber according to the comparative example, but a peak occurs due to an acyl functional group after the carbon nanotube fiber is cooled according to the exemplary embodiment.

Thus, functional groups in the carbon nanotube and azelaic acid dichloride react with each other such that a covalent bond is formed while forming an acyl functional group.

### (Experimental Example 2) Scanning electron microscope analysis result

Morphology and diameter of the carbon nanotube fiber according to the exemplary embodiment were respectively evaluated using a scanning electron microscope (Hitachi, S4800).

FIG. 2 is a scanning electron microscope photograph of the carbon nanotube fiber according to the exemplary embodiment.

Referring to FIG. 2, the carbon nanotube fiber was shrunk while bundles of carbon nanotubes were aligned in the axis direction, and it can be determined that a diameter was about 3 µm.

### (Experimental Example 3) Tensile strength measurement result

Tensile strengths of the carbon nanotube fibers according to the exemplary embodiment and the comparative example were respectively measured. For the measurement, a nano-tensile testing device (NANO Bionix, Agilent Technologies) was used. Specifically, an end of a 10 mm-length carbon nanotube fiber was fixed and strain of 0.0027/s was applied to measure tensile strength thereof.

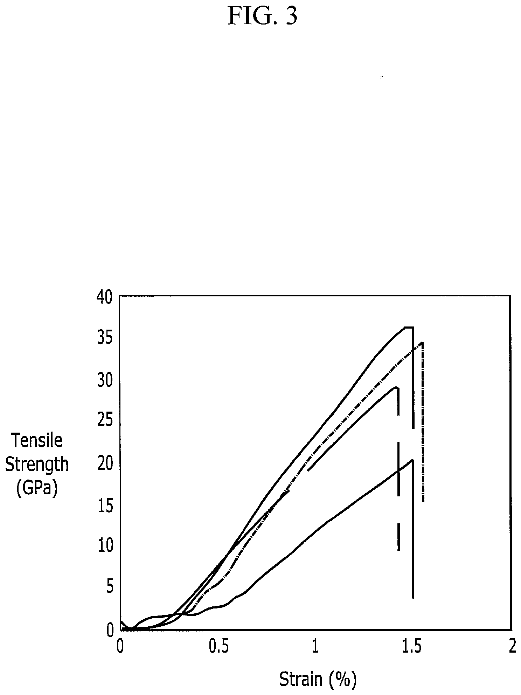

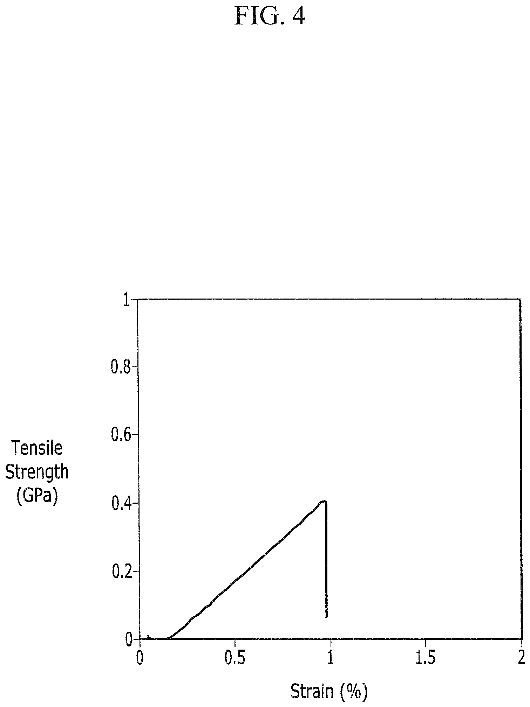

FIG. 3 shows a result of four measurements of tensile strength of the carbon nanotube fiber according to the exemplary embodiment of the present invention, and FIG. 4 shows a result of measurement of tensile strength of the carbon nanotube fiber according to the comparative example.

In FIG. 4, it was determined than the carbon nanotube filer of the comparative example had tensile strength of 0.4 GPa. On the contrary, referring to FIG. 3, the carbon nanotube fiber of the exemplary embodiment had tensile strength of up to 36 GPa.

Therefore, it can be determined that the carbon nanotube fiber according to the exemplary embodiment of the present invention has higher tensile strength compared to an existing carbon nanotube fiber. This is because the wall surfaces of the carbon nanotubes that compose the carbon nanotube fiber are cross-linked by the acylation reaction such that shear strength between the carbon nanotubes can be enhanced.

While this invention has been described in connection with what is presently considered to be practical exemplary embodiments, it is to be understood that the invention is not limited to the disclosed embodiments, but, on the contrary, is intended to cover various modifications within the scope of the appended claims. Therefore, the aforementioned embodiments should be understood to be exemplary but not limiting the present invention in any way.

## Claims

1. A carbon nanotube fiber having a tensile strength exceeding 5 GPa which is measured by applying a strain of 0.0027/s to a 10 mm long fiber sample; wherein the wall surfaces of the carbon nanotubes that compose the carbon nanotube fiber are cross-linked to each other; wherein the cross-linking results from an acylation reaction between the wall surfaces of the carbon nanotubes; and wherein the acylation reaction is a one-step reaction without undergoing surface modification of the carbon nanotubes.

2. The carbon nanotube fiber of claim 1, wherein a diameter of the carbon nanotube fiber is 1 µm to 150 µm.

3. A method for producing a high-strength carbon nanotube fiber, comprising:
producing a carbon nanotube fiber precursor consisting of carbon nanotubes;
evenly dispersing a cross-linking agent on the carbon nanotube fiber precursor; and
acquiring carbon nanotube fiber by an acylation reaction by thermally treating the carbon nanotube fiber precursor on which the cross-linking agent is evenly dispersed,
wherein the acquired carbon nanotube fiber has cross-linking between wall surfaces of the carbon nanotubes each other,
wherein the carbon nanotube fiber precursor is a structure in which the carbon nanotubes are arranged in the axis direction,
wherein the cross-linking agent comprises two or more acyl groups, and
wherein the acquiring of the carbon nanotube fiber by thermally treating the carbon nanotube fiber precursor on which the cross-linking agent is evenly dispersed is performed through a one-step reaction without undergoing surface modification of the carbon nanotubes.

4. The method of claim 3, wherein the producing a carbon nanotube fiber precursor consisting of carbon nanotubes is performed by one of methods of forest spinning, direct spinning, and solution spinning.

5. The method of claim 3, wherein the producing a carbon nanotube fiber precursor consisting of carbon nanotubes is performed by forest spinning.

6. The method of claim 3, wherein producing a carbon nanotube fiber precursor consisting of carbon nanotubes comprises:
preparing a substrate;
growing carbon nanotubes on the substrate; and
drawing out carbon nanotube fiber from the substrate where the carbon nanotubes have been grown.

7. The method of claim 6, wherein the drawing out of the carbon nanotube fiber precursor from the substrate where the carbon nanotubes have been grown is performed by stretching the carbon nanotubes grown on the substrate in one direction, and pulling out the stretched carbon nanotubes in the form of a noodle.

8. The method of claim 6, wherein the carbon nanotube fiber precursor is formed in the shape of a carbon nanotube ribbon.

9. The method of claim 3, wherein the producing a carbon nanotube fiber precursor consisting of carbon nanotubes is performed in a temperature range of 600 °C to 1000 °C.

10. The method of claim 3, wherein the evenly dispersing of the cross-linking agent on the carbon nanotube fiber precursor is performed by using one of an air gun, a nebulizer, heating, and vacuuming.

11. The method of claim 3, wherein the evenly dispersing of the cross-linking agent on the carbon nanotube fiber precursor is performed by soaking one end of the carbon nanotube fiber precursor in the cross-linking agent in a liquid state.

12. The method of claim 3, wherein the cross-linking agent is one or more selected from a group including a halogenated acyl compound and a carboxylic acid compound.

## Patentansprüche

1. Kohlenstoffnanoröhrenfaser mit einer Zugfestigkeit von mehr als 5 GPa, die gemessen wird, indem eine Dehnung von 0,0027/s auf eine 10 mm lange Faserprobe ausgeübt wird; wobei die Wandoberflächen der Kohlenstoffnanoröhren, aus denen die Kohlenstoffnanoröhrenfaser besteht, miteinander vernetzt sind; wobei die Vernetzung aus einer Acylierungsreaktion zwischen den Wandoberflächen der Kohlenstoffnanoröhren resultiert; und wobei die Acylierungsreaktion eine einstufige Reaktion ist, ohne dass eine Oberflächenmodifikation der Kohlenstoffnanoröhren erfolgt.

2. Kohlenstoffnanoröhrenfaser nach Anspruch 1, wobei der Durchmesser der Kohlenstoffnanoröhrenfaser 1 um bis 150 µm beträgt.

3. Verfahren zur Herstellung einer hochfesten Kohlenstoffnanoröhrenfaser, umfassend:
Herstellen eines Vorläufers für Kohlenstoffnanoröhrenfasern, der aus Kohlenstoffnanoröhren besteht;
gleichmäßiges Dispergieren eines Vernetzungsmittels auf dem Vorläufer für Kohlenstoffnanoröhrenfasern; und
Erwerben von Kohlenstoffnanoröhrenfasern durch eine Acylierungsreaktion durch thermische Behandlung des Vorläufers für Kohlenstoffnanoröhrenfasern, auf dem das Vernetzungsmittel gleichmäßig dispergiert ist,
wobei die erworbene Kohlenstoffnanoröhrenfaser Vernetzungen zwischen den Wandoberflächen der Kohlenstoffnanoröhren untereinander aufweist,
wobei der Vorläufer für Kohlenstoffnanoröhrenfasern eine Struktur ist, in der die Kohlenstoffnanoröhren in der Achsenrichtung angeordnet sind,
wobei das Vernetzungsmittel zwei oder mehr Acylgruppen umfasst, und
wobei das Erwerben der Kohlenstoffnanoröhrenfaser durch thermische Behandlung des Vorläufers für Kohlenstoffnanoröhrenfasern, auf dem das Vernetzungsmittel gleichmäßig dispergiert ist, durch eine einstufige Reaktion durchgeführt wird, ohne dass eine Oberflächenmodifikation der Kohlenstoffnanoröhren erfolgt.

4. Verfahren nach Anspruch 3, wobei die Herstellung eines aus Kohlenstoffnanoröhren bestehenden Kohlenstoffnanoröhren-Faservorläufers durch eines der Verfahren des Waldspinnens, des Direktspinnens und des Lösungsspinnens durchgeführt wird.

5. Verfahren nach Anspruch 3, wobei die Herstellung eines aus Kohlenstoffnanoröhren bestehenden Vorläufers für Kohlenstoffnanoröhrenfasern durch Waldspinnen erfolgt.

6. Verfahren nach Anspruch 3, wobei die Herstellung eines Vorläufers für Kohlenstoffnanoröhrenfasern, der aus Kohlenstoffnanoröhren besteht, Folgendes umfasst:
Vorbereiten eines Substrats;
Züchten von Kohlenstoffnanoröhren auf dem Substrat; und
Herausziehen der Kohlenstoffnanoröhrenfasern aus dem Substrat, auf dem die Kohlenstoffnanoröhren gezüchtet worden sind.

7. Verfahren nach Anspruch 6, wobei das Herausziehen des Vorläufers für Kohlenstoffnanoröhrenfasern aus dem Substrat, auf dem die Kohlenstoffnanoröhren gezüchtet wurden, durch Dehnen der auf dem Substrat gezüchteten Kohlenstoffnanoröhren in eine Richtung und Herausziehen der gedehnten Kohlenstoffnanoröhren in Form einer Nudel durchgeführt wird.

8. Verfahren nach Anspruch 6, wobei der Vorläufer für die Kohlenstoffnanoröhrenfasern in der Form eines Kohlenstoffnanoröhrenbandes geformt wird.

9. Verfahren nach Anspruch 3, wobei die Herstellung eines Vorläufers für Kohlenstoffnanoröhrenfasern, der aus Kohlenstoffnanoröhren besteht, in einem Temperaturbereich von 600 °C bis 1000 °C durchgeführt wird.

10. Verfahren nach Anspruch 3, wobei das gleichmäßige Dispergieren des Vernetzungsmittels auf dem Vorläufer für Kohlenstoffnanoröhrenfasern unter Verwendung einer Luftpistole, eines Verneblers, einer Heizung oder eines Vakuums durchgeführt wird.

11. Verfahren nach Anspruch 3, wobei das gleichmäßige Dispergieren des Vernetzungsmittels auf dem Vorläufer für Kohlenstoffnanoröhrenfasern durch Eintauchen eines Endes des Vorläufers für Kohlenstoffnanoröhrenfasern in das Vernetzungsmittel in flüssigem Zustand durchgeführt wird.

12. Verfahren nach Anspruch 3, wobei das Vernetzungsmittel eines oder mehrere ist, die aus einer Gruppe ausgewählt sind, die eine halogenierte Acylverbindung und eine Carbonsäureverbindung einschließt.

## Revendications

1. Fibre de nanotubes de carbone ayant une résistance à la traction supérieure à 5 GPa qui est mesurée en appliquant une contrainte de 0,0027/s à un échantillon de fibre de 10 mm de long ; dans laquelle les surfaces de paroi des nanotubes de carbone qui composent la fibre de nanotubes de carbone sont réticulées les unes aux autres ; dans laquelle la réticulation résulte d'une réaction d'acylation entre les surfaces de paroi des nanotubes de carbone ; et dans laquelle la réaction d'acylation est une réaction en une étape sans que la surface des nanotubes de carbone subisse de modification.

2. Fibre de nanotubes de carbone selon la revendication 1, dans laquelle un diamètre de la fibre de nanotubes de carbone est de 1 µm à 150 µm.

3. Procédé de production d'une fibre de nanotubes de carbone à haute résistance, comprenant :
la production d'un précurseur de fibre de nanotubes de carbone constitué de nanotubes de carbone ;
la dispersion uniforme d'un agent de réticulation sur le précurseur de fibre de nanotubes de carbone ; et
l'acquisition d'une fibre de nanotubes de carbone par une réaction d'acylation en traitant thermiquement le précurseur de fibre de nanotubes de carbone sur lequel l'agent de réticulation est uniformément dispersé,
dans lequel la fibre de nanotubes de carbone acquise présente une réticulation entre les surfaces de paroi des nanotubes de carbone,
dans lequel le précurseur de fibre de nanotubes de carbone est une structure dans laquelle les nanotubes de carbone sont agencés dans la direction de l'axe,
dans lequel l'agent de réticulation comprenant deux groupes acyle ou plus, et
dans lequel l'acquisition de la fibre de nanotubes de carbone par traitement thermique du précurseur de fibre de nanotubes de carbone sur lequel l'agent de réticulation est uniformément dispersé est réalisée par une réaction en une étape sans que la surface des nanotubes de carbone subisse de modification.

4. Procédé selon la revendication 3, dans lequel la production d'un précurseur de fibre de nanotubes de carbone constitué de nanotubes de carbone est réalisée par l'un des procédés suivants : filage en forêt, filage direct, et de filage en solution.

5. Procédé selon la revendication 3, dans lequel la production d'un précurseur de fibre de nanotubes de carbone constitué de nanotubes de carbone est réalisée par filage en forêt.

6. Procédé selon la revendication 3, dans lequel la production d'un précurseur de fibre de nanotubes de carbone constitué de nanotubes de carbone comprend :
la préparation d'un substrat ;
la formation de nanotubes de carbone sur le substrat ; et
le retrait d'une fibre de nanotubes de carbone à partir du substrat où les nanotubes de carbone ont été formés.

7. Procédé selon la revendication 6, dans lequel le retrait du précurseur de fibre de nanotubes de carbone à partir du substrat où les nanotubes de carbone ont été formés est réalisé en étirant les nanotubes de carbone formés sur le substrat dans une direction, et en détachant les nanotubes de carbone étirés sous la forme d'une nouille.

8. Procédé selon la revendication 6, dans lequel le précurseur de fibre de nanotubes de carbone est formé sous la forme d'un ruban de nanotubes de carbone.

9. Procédé selon la revendication 3, dans lequel la production d'un précurseur de fibre de nanotubes de carbone constitué de nanotubes de carbone est réalisée dans une plage de températures de 600 °C à 1000 °C.

10. Procédé selon la revendication 3, dans lequel la dispersion uniforme de l'agent de réticulation sur le précurseur de fibre de nanotubes de carbone est réalisée en utilisant l'un parmi un pistolet à air, un nébuliseur, un chauffage, et une mise sous vide.

11. Procédé selon la revendication 3, dans lequel la dispersion uniforme de l'agent de réticulation sur le précurseur de fibre de nanotubes de carbone est réalisée en trempant une extrémité du précurseur de fibre de nanotubes de carbone dans l'agent de réticulation à l'état liquide.

12. Procédé selon la revendication 3, dans lequel l'agent de réticulation est un ou plusieurs sélectionnés dans un groupe comprenant un composé d'acyle halogéné et un composé d'acide carboxylique.
